# EUROPÄISCHE PATENTANMELDUNG

(11) **EP 0 590 492 A1**
(43) Veröffentlichungstag der Anmeldung: **06.04.1994**
(21) Anmeldenummer: 93115266.4
(22) Anmeldetag: 22.09.1993
(51) Int. Cl.: H04M 1/00

(54) **Mobiltelefon mit Hilfetaste zur Informationsanzeige**

(30) Priorität: 01.10.1992 DE 4233069
(71) Anmelder: SIEMENS AKTIENGESELLSCHAFT, D-80333 München (DE)
(72) Erfinder: Christal, Philip, D-85646 Anzing (DE)

(57) **Zusammenfassung**

Das Mobiltelefon ist mit einer Hilfe-Taste versehen, bei deren Betätigung auf dem Display Informationen über ablaufende Funktionen und Zustandsmeldungen des Mobiltelefons sowie über vom Benutzer vorzunehmende Schritte bei der Handhabung des Mobiltelefons angezeigt werden.

## Beschreibung

Die Erfindung bezieht sich auf ein Mobiltelefon mit einem Tastenfeld mit Wähl- und Funktionstasten und einem Anzeigefeld und mit ggf. im Bedienteil integrierten Sende-/Empfangseinrichtungen (Handheld).

Die vor längerer Zeit gebräuchlichen Telefone hatten wenig Probleme mit dem Mensch-Maschine-Interface; es war einfach: Wählen und Sprechen. Technologische Fortschritte haben eine beeindruckende Menge von Merkmalen im Telefonwesen gebracht, z.B. das Memory zum Zweck einer effizienten Nutzung des Mobiltelefons. Diese Fortschritte sind besonders deutlich bei den heutigen Mobiltelefonen mit Rufumleitung (Divert), Rufsperren (Call barring) usw. Das Problem ist, daß die Benutzer diese Möglichkeiten nicht nutzen können und auch nicht nutzen und spezielle Einweisungen nicht durchgeführt werden.

Dieses Problem nimmt zu, und mit der GSM-Technologie kommen viele neue und wertvolle Merkmale vom Netzwerk, Mobiltelefon und der verwendeten Chipkarte (SIM - Subseriber Identity Module). Die Benutzer dieser Technologie sind zunehmend weniger technisch versiert, ein Trend der sich in dem Maß beschleunigt, wie diese Produkte den Verbrauchermarkt ansprechen. Ein weiteres Problem besteht darin, daß die erfahrenen Benutzer eine schnellere und effektivere Nutzung dieser Merkmale wollen, während die gelegentlichen oder Erstbenutzer eine schrittweise Führung/Belehrung benötigen.

Bedienungsanleitungen können für einen eingeweihten Benutzer eine Lösung bringen, diese werden jedoch kaum gelesen und ermüdende Bezugnahmen schrecken die Benutzer ab. In den meisten Fällen geht das Instruktionsmaterial innerhalb weniger Tage verloren und die unzureichende Benutzung von Merkmalen ist daher nicht überraschend. Es ist zunehmend übliche Praxis, zusätzlich zu einem detaillierten Arbeitshandbuch eine separate Anweisung oder eine zusammenfassende Broschüre vorzusehen und manchmal eine Plastik "Promt"-Karte. Keine von diesen gedruckten Anweisungen hat sich als wirksam erwiesen, und die Verwirrung stellt oft ein beängstigendes Abschreckungsmittel für die Kaufentscheidung dar.

Displays an Telefonen nehmen immer mehr zu, aber die angezeigte Information ist sehr begrenzt. In den meisten Fällen wird die gewählte Nummer angezeigt, manchmal unterstützt durch unklare Symbole mit der Absicht, den relevanten, oft technischen Status zu übermitteln. An Mobiltelefonen werden verschiedentlich LCD-Displays benutzt, die in der Lage sind, bis zu vier Zeilen von zwölf Buchstaben oder numerischen Zeichen anzuzeigen, in einigen Fällen unterstützt von kleinen graphischen Symbolen. Selbst mit diesem Format kann ein wenig Hilfe vorgesehen werden, um einen effektiven Gebrauch des Telefons zu fördern, besonders wenn man den unterschiedlichen Stand der Benutzererfahrung betrachtet.

Der Erfindung liegt die Aufgabe zugrunde, die vielfältigen Informationen zur Benutzung des Mobiltelefons benutzerfreundlich darzustellen.

Diese Aufgabe wird gemäß der Erfindung gelöst durch eine mit einer zusätzlichen Taste (Informations-Hilfs-Taste) gekoppelte Informationsanzeige am Display, in dem bei Betätigung der Taste auf dem Display Informationen über im Mobiltelefon ablaufende Funktionen, Zustandsmeldungen über das Mobiltelefon sowie über vom Benutzer vorzunehmende Schritte bei der Handhabung des Mobiltelefons angezeigt werden.

Es wird somit ein intelligentes Lehrsystem geschaffen, das eine mit "i" bezeichnete Informations/Hilfs-Taste verwendet.

Die mit der i-Taste erzeugten Texte bieten die volle Funktionalität des Displays, z.B. Softhey-Legenden, die in einer parallelen Patentanmeldung näher beschrieben sind. Damit ist ein Mobiltelefon zugleich mit einer Hilfstaste und einem Lehrsystem ausgestattet, das für die der Erfindung zugrundeliegende Aufgabe eine optimale Lösung bildet. Unter Softkey wird dabei verstanden, daß Tasten unterhalb des Displays angeordnet sind, durch deren Betätigung die jeweils im Display darüber angezeigte Aktion ausgeführt wird.

Im folgenden sind einige Beispiele angegeben für Informationen bzw. Instruktionen, die dem unerfahrenen Benutzer schrittweise als Gebrauchsanweisungen gegeben werden und in gleicher Weise für einen erfahrenen Benutzer hilfreich sind. Diese Informationen können auf einem entsprechend gestalteten Display-Rahmen mit Texten und Symbolen in den verschiedensten Sprachen und Darstellungsarten wiedergegeben werden.

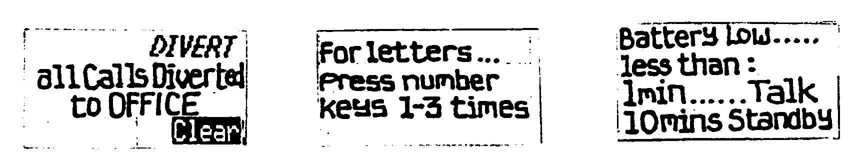

## Patentansprüche

1. Mobiltelefon mit einem Tastenfeld mit Wähl- und Funktionstasten und einem Anzeigefeld und mit ggf. im Bedienteil integrierten Sende-/Empfangseinrichtungen (Handheld), **gekennzeichnet** durch eine mit einer zusätzlichen Taste (Informations/Hilfs-Taste) gekoppelte Informationsanzeige am Display, indem bei Betätigung der Taste auf dem Display Informationen über im Mobiltelefon ablaufende Funktionen, Zustandsmeldungen über das Mobiltelefon sowie über vom Benutzer vorzunehmende Schritte bei der Handhabung des Mobiltelefons angezeigt werden.
